# NEUE EUROPÄISCHE PATENTSCHRIFT

(11) **EP 2 188 083 B2**
(45) Veröffentlichungstag und Bekanntmachung des Hinweises auf die Entscheidung über den Einspruch: **23.07.2014**
(45) Hinweis auf die Patenterteilung: 06.04.2011
(21) Anmeldenummer: 08801671.2
(22) Anmeldetag: 22.08.2008
(51) Int. Cl.: B23B 27/16, B23C 5/24

(54) **ZERSPANUNGSWERKZEUG**
CUTTING TOOL
OUTIL DE COUPAGE

(30) Priorität: 30.08.2007 DE 102007040936
(43) Veröffentlichungstag der Anmeldung: 26.05.2010
(73) Patentinhaber: MAPAL Fabrik für Präzisionswerkzeuge Dr. Kress KG, 73431 Aalen (DE)
(72) Erfinder: STROM, Rudolf, 71665 Vaihingen/Enz (DE)
(74) Vertreter: Gleiss, Alf-Olav
(86) Internationale Anmeldenummer: PCT/EP2008/006900
(87) Internationale Veröffentlichungsnummer: WO 2009/030378

(56) Entgegenhaltungen:
- EP-A- 1 314 503
- EP-A1- 1 314 503
- EP-A2- 0 300 172
- WO-A-02/00382
- DD-A5- 292 402
- DE-A1- 3 936 243
- DE-C2- 3 936 243
- DE-U1- 9 204 587
- JP-A- H1 119 817
- US-A- 4 199 035
- US-A- 5 391 023
- US-A1- 2004 028 492
- US-B1- 6 231 276

## Beschreibung

Die Erfindung betrifft ein Zerspanungswerkzeug gemäß Oberbegriff des Anspruchs 1 und wie aus WO 02/00382 A1 bekannt, ebenso aus DD 292 402 15.

Sie weisen einen Grundkörper mit mindestens einem daran befestigten Schneidkörper auf, der wenigstens eine geometrisch definierte Schneide umfasst. Eine Justiereinrichtung dient dazu, die exakte Position der Schneide einstellen zu können. Es hat sich herausgestellt, dass bekannte Justiereinrichtungen einen relativ großen Bauraum brauchen, der den Grundkörper des Werkzeugs schwächt. Aufgabe der Erfindung ist es daher, ein Zerspanungswerkzeug zu schaffen, welches diesen Nachteil vermeidet und die Justiereinrichtung einen sehr kleinen Bauraum braucht.

Zur Lösung dieser Aufgabe wird ein Zerspanungswerkzeug vorgeschlagen, das die in Anspruch 1 genannten Merkmale umfasst. Es hat also einen Grundkörper, einen wenigstens eine geometrisch definierte Schneide aufweisenden Schneidkörper und eine Justiereinrichtung mit einem Justierelement, der mittels einer Justierschraube aufspreizbar ist. Durch diese Aufspreizung ist eine Einstellung der mindestens einen Schneide möglich. Das Zerspanungswerkzeug zeichnet sich dadurch aus, dass das Justierelement der Justiereinrichtung als Ring ausgebildet ist, der sich einerseits an dem Schneidkörper und andererseits an dem Grundkörper des Zerspanungswerkzeugs abstützt. Der Ring kann, ohne dass es zu Funktionsnachteilen käme, dünn ausgebildet werden, sodass beim Einstellen der mindestens einen geometrisch definierten Schneide ein geringer Kraftaufwand zum Aufspreizen des Justierelements der Justiereinrichtung erforderlich ist, und ein nur sehr kleiner Bauraum erforderlich ist.

Das Zerspanungswerkzeug zeichnet sich dadurch aus, dass das als Ring ausgebildete Justierelement der Justiereinrichtung einen Schlitz aufweist. Es kann also mit relativ geringer Kraft aufgeweitet werden, um die Position einer Messerplatte des Zerspanungswerkzeugs einzustellen.

Ein besonders bevorzugtes Ausführungsbeispiel des Zerspanungswerkzeugs zeichnet sich dadurch aus, dass der Schneidkörper als Messerplatte ausgebildet ist, und dass die Dicke des Rings allenfalls so groß ist wie die Dicke der Messerplatte. Aufgrund des geringen Bauraums einer derartigen Justiereinrichtung wird das Zerspanungswerkzeug nur sehr wenig geschwächt, so dass sich eine hohe Funktionssicherheit ergibt.

Weitere Ausgestaltungen ergeben sich aus den Unteransprüchen.

Die Erfindung wird im Folgenden anhand einer Zeichnung näher erläutert. Es zeigen:
- Figur 1: eine perspektivische Vorderansicht eines Zerspan- ungswerkzeugs;
- Figur 2: eine Seitenansicht des Zerspanungswerkzeugs gemäß Figur 1;
- Figur 3: mehrere Ansichten einer Justiereinrichtung und
- Figur 4: einen Ausschnitt des Zerspanungswerkzeugs gemäß den Figuren 1 und 2 ohne Messerplatte und ohne Jus- tiereinrichtung.

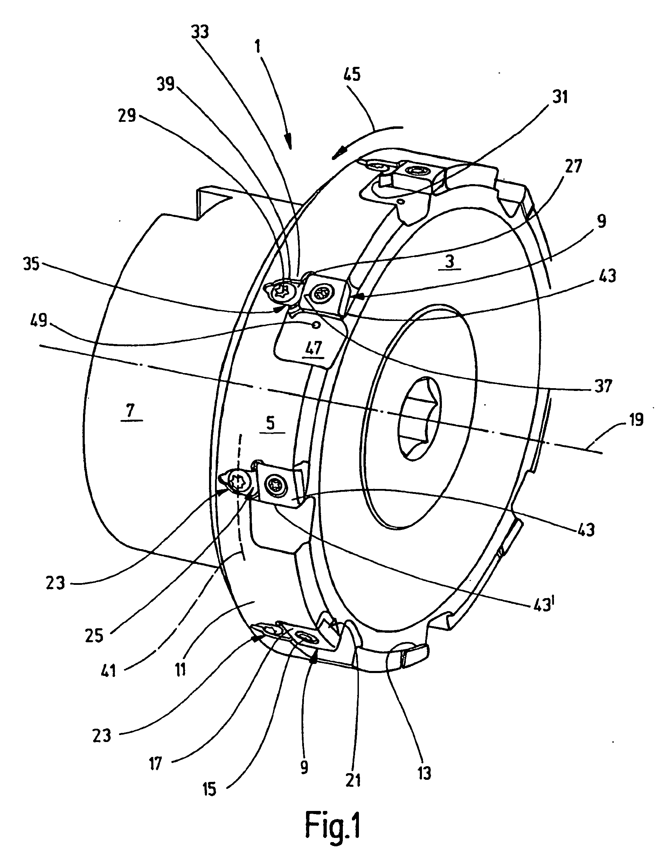

Das in Figur 1 dargestellte Zerspanungswerkzeug 1 ist beispielhaft als Planfräser ausgebildet. Es in perspektivischer Darstellung wiedergegeben, sodass dessen Vorderseite, außerdem dessen Umfangsfläche erkennbar sind. Das im Folgenden kurz als Werkzeug 1 bezeichnete Zerspanungswerkzeug weist hier einen Schaft 7 auf, der dazu dient, das Werkzeug mit einer Werkzeugmaschine, unmittelbar oder über ein Zwischenstück, einen Adapter oder dergleichen, zu verbinden.

Das Werkzeug 1 weist mindestens einen hier als Messerplatte 9 ausgebildeten Schneidkörper auf. Das hier wiedergegebene Ausführungsbeispiel ist mit acht gleichartigen Messerplatten 9 versehen, die an dem Grundkörper 11 des Werkzeugs 1 befestigt sind. Hier sind die Messerplatten in geeigneten Ausnehmungen 13 untergebracht und tangential am Werkzeug 1 mittels einer Spannschraube 15 befestigt. Diese durchdringt die Messerplatte 9 senkrecht. Das heißt, die hier nicht wiedergegebene Drehachse der Spannschraube 15 steht senkrecht auf der Mittelachse 19 des Werkzeugs 1, die auch dessen Drehachse darstellt. Die Spanschraube 15 steht auch senkrecht auf der Grundfläche 21 der Ausnehmung 13, auf der die Messerplatte 9 aufliegt: Daher auch die Aussage, dass die Messerplatte 9 praktisch tangential zur Umfangsfläche 5 des Werkzeugs 1 angeordnet ist.

Alle Messerplatten des Werkzeugs 1 sind gleich ausgebildet, ebenso die Ausnehmungen 13 für die Messerplatten 9. Daher gelten die Erläuterungen für alle Messerplatten des Werkzeugs 1.

Mit der mindestens einen Messerplatte 9 wirkt eine Justiereinrichtung 23 zusammen, die ein aufspreizbares Justierelement 25 aufweist, das vorzugsweise als geschlitzter Ring 27 ausgebildet ist, der, wie die zugehörige Messerplatte 9 quasi tangential zur Umfangsfläche 5 des Werkzeugs 1 ausgerichtet ist. Der Ring 27 wird von einer Justierschraube am Grundkörper 11 des Werkzeugs 1 gehalten. Diese ist hier ebenfalls senkrecht zur Mittelachse 19 des Werkzeugs 1 ausgerichtet. Die Justiereinrichtung 23 ist in einer Tasche 31 im Grundkörper 11 des Werkzeugs 1 untergebracht, die nach außen von einer Wand 33 begrenzt wird, deren Außenseite hier mit der Umfangsfläche 5 des Werkzeugs 1 zusammenfällt. Die Wand 33 weist eine Durchbrechung 35 auf, die kleiner ist als das Justierelement 25 der Justiereinrichtung. Dieser kann also nicht in radialer Richtung nach außen durch die Durchbrechung 35 herausfallen.

Das als Ring 27 ausgebildete Justierelement 25 der Justiereinrichtung 23 stützt sich einerseits am Grund der Tasche 31 und andererseits an einer Seitenfläche 37 der zugehörigen Messerplatte 9 ab. Wird die Justierschraube 29 betätigt, das heißt, weiter in den Grundkörper 11 in des Werkzeugs 1 hineingeschraubt, so wird das Justierelement 25 aufgeweitet, sodass die Messerplatte 9 hier in axialer Richtung, also senkrecht zur Drehachse der Justierschraube 29, verlagert wird und etwas weiter über die Vorderseite 3 des Werkzeugs 1 hinausragt.

Das Justierelement 25 ist mit einem Schlitz 39 versehen, sodass die Aufspreizung des Justierelements 25 mit einem geringeren Kraftaufwand möglich ist. Außerdem führt die Auslegung des Justierelements 25 als geschlitzter Ring 27 dazu, dass die Haltbarkeit der Justiereinrichtung 23 erhöht wird: Durch die Ausgestaltung des Rings 27 mit einem Schlitz 39 wird sichergestellt, dass der Ring 27 auch nach mehreren Justiervorgängen keine Ermüdungsbrüche erleidet. Darüber hinaus sind, wie gesagt, die Justierkräfte geringer als bei einem geschlossenen Ring.

Der Schlitz 29 ist so ausgerichtet, dass er vorzugsweise auf einer gedachten Umfangslinie 41 angeordnet ist, die quasi parallel zur Seitenfläche 37 der Messerplatte 9 verläuft. Durch diese Ausgestaltung ist sichergestellt, dass die der Messerplatte 9 zugewandte Hälfte des Rings 27 in Richtung auf die Messerplatte 9 verschwenkt wird, wenn die Justierschraube 29 angezogen wird. Gleichzeitig legt sich die andere Hälfte des Rings 27 am Grund der Tasche 31 an, sodass sich das Justierelement 25 und damit der Ring 27 der Justiereinrichtung 23 sicher abstützt.

Durch die Unterbringung der Justiereinrichtung 23 in einer Tasche 31 wird sichergestellt, dass das Justierelement 25 der Justiereinrichtung 23 auch hohen Drehzahlen sicher im Grundkörper 11 des Werkzeugs 1 gehalten wird. Überdies kann das Justierelement 25 auch bei gelockerter Justierschraube 29 nicht aus dem Grundkörper 11 beziehungsweise der dort vorgesehenen Tasche 31 herausfallen, wenn die Messerplatte 9 demontiert sein sollte.

Vorzugsweise ist die Messerplatte 9 mehreckig, hier viereckig ausgebildet. Ist also eine über die Vorderseite 3 des Werkzeugs 1 hinausragende geometrisch definierte Schneide 3 verschlissen, wird die Messerplatte 9 um eine senkrecht auf ihrer Vorderseite 17 stehende Achse gedreht und wieder am Grundkörper 11 des Werkzeugs 1 befestigt. Damit steht eine unverbrauchte Schneide zur Bearbeitung eines Werkstücks zur Verfügung.

In der Regel wird das Werkzeug 1 zur Bearbeitung eines Werkstücks in Rotation versetzt. Es dreht sich in Richtung des in Figur 1 wiedergegebenen Pfeils 45 also gegen den Uhrzeigersinn. Damit trägt die Schneide 43 der Messerplatte 9 Späne von dem zu bearbeitenden Werkstück ab. Diese werden von einem Spanraum 47 aufgenommen, in den auch ein Kühl-/Schmiermittelkanal 49 münden kann. Das ausströmende Medium kühlt die aktive Schneide 43 der Messerplatte 9 und erleichtert den Abtransport der in den Spanraum 47 gelangenden Späne.

Bei einer Rotation des Werkzeugs 1 in Richtung des Pfeils 45 werden nicht nur Späne von dem Bereich der Schneide 43 abgetragen, die über die Vorderseite 3 des Werkzeugs 1 steht. Vielmehr ist festzuhalten, dass auch der Bereich 43' der Schneide 43 über die Umfangsfläche 5 des Werkzeugs 1 steht und Späne von dem zu bearbeitenden Werkstück abträgt.

Der Bereich 43' der Schneide 43 steht deshalb über die Umfangsfläche 5 des Werkzeugs 1 hinaus, weil die Messerplatte 5 nicht ganz exakt tangential in die Umfangsfläche eingesetzt ist. Denkbar wäre es auch, die Messerplatte 5 im Bereich 43' der Schneide 43 dicker zu machen als am gegenüberliegenden Ende. In diesem Fall könnte die Messerplatte 9 allerdings nicht als Wendeplatte ausgebildet werden.

Vorzugsweise ist die Messerplatte 5 jedoch, wie dargestellt, mit einer gleichförmigen Dicke ausgebildet. Darüber hinaus ist das Justierelement 25 der Justiereinrichtung 23 annähernd gleich dick wie die Messerplatte 9, sodass es nicht über diese hinaus steht, andererseits aber Stützkräfte im Wesentlichen über die gesamte Höhe der Seitenfläche 37 bereitstellt.

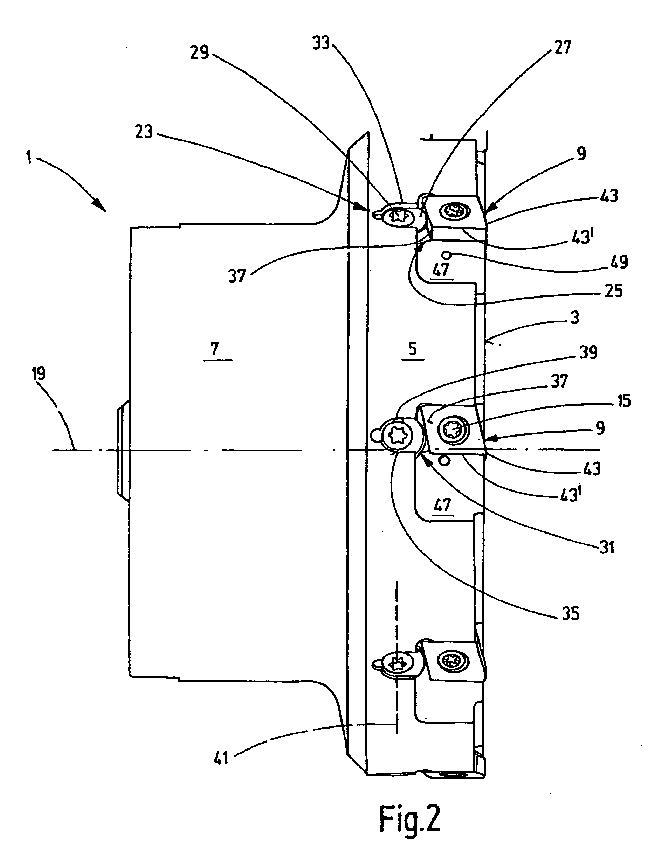

Figur 2 zeigt das Werkzeug 1 in Seitenansicht. Gleiche Teile sind mit gleichen Bezugsziffern versehen, sodass insofern auf die vorangegangene Beschreibung zu Figur 1 verwiesen wird.

Bei der Darstellung gemäß Figur 2 zeigt sich, insbesondere bei der in der nähe der Mittellinie 19 angeordneten Messerplatte 9, die in Draufsicht wiedergegeben ist, dass die Messerplatten 9 nicht quadratisch sondern rhomboid ausgebildet sind, wobei die Schneide 43 über die Vorderseite 3 des Werkzeugs 1 hinaus steht und ein Bereich 43' der Schneide 43 im Wesentlichen parallel zur Mittelachse 19 des Werkzeugs 1 ausgerichtet ist. Deutlich wird auch hier, dass die Tasche 31 die Justiereinrichtung 23 aufnimmt und bereichsweise so abdeckt, dass sie auch bei hohen Zentrifugalkräften sicher gehalten wird. Die Justierschraube 29 ist über die Durchbrechung 35 in der Wand 33 gut erreichbar.

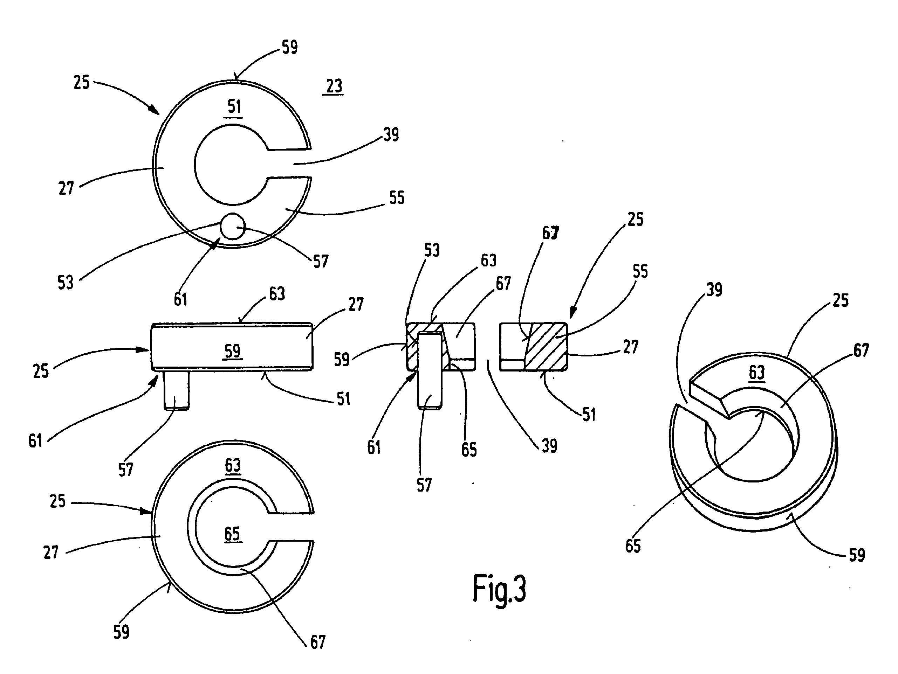

Figur 3 zeigt das Justierelement 25 der Justiereinrichtung 23 aus mehreren Richtungen. Oben links ist die Unterseite 51 des Rings 27 ausgebildeten Justierelements 25 zu sehen. Deutlich ist der hier bei "drei Uhr" angeordnete Schlitz 39 zu erkennen, der die Aufweitbarkeit des als Ring 27 ausgebildeten Justierelements 25 der Justiereinrichtung 23 erleichtert.

Mit der Unterseite 51 liegt das Justierelement 25 auf einer Seitenfläche der Tasche 31, damit am Grundkörper 11 des Werkzeugs 1 an.

Vorzugsweise ist vorgesehen, dass der Schlitz 39 an einer definierten Position angeordnet ist, insbesondere im Bereich einer Umfangslinie 41, die in den Figuren 1 und 2 erkennbar ist, um ein gezieltes Aufweitverhalten des Justierelements 25 beziehungsweise des Rings 27 zu gewährleisten.

Die gewünschte Ausrichtung des Justierelements 25 der Justiereinrichtung 23 im Grundkörper 11 des Werkzeugs 1 kann dadurch erreicht werden, dass in eine Ausnehmung 53 im Justierelement 25 des Rings 27 ein Stift 57 eingesetzt wird, der in den Grundkörper 11 des Werkzeugs 1 eingreift. Auch an der Umfangsfläche 59 des Justierelements 25 können ein Vorsprung, eine Vertiefung oder eine Abflachung entlang einer gedachten Kreissekante vorgesehen werden, um ein ungewolltes Verdrehen im Grundkörper 11 des Werkzeugs 1 zu gewährleisten, und um damit eine Positionierungseinrichtung 61 zu realisieren.

Links in der Mitte in Figur 3 ist das Justierelement 25 der Justiereinrichtung 23 in Seitenansicht wiedergegeben. Gleiche Teile sind mit gleichen Bezugsziffern versehen, sodass insofern auf die vorangegangene Beschreibung verwiesen wird.

Deutlich sichtbar ist hier der über die Unterseite 51 vorspringende Stift 57 der Positionierungseinrichtung 61. Erkennbar ist auch, dass die Oberseite 63 des Rings 27 parallel zur Unterseite 51 verläuft. Die Dicke des als Ring 27 ausgebildeten Justierelements 25 der Justiereinrichtung 23 ist so gewählt, dass der Ring 27 vorzugsweise mit seiner Umfangsfläche 59 über praktisch die gesamte Höhe an der in den Figuren 1 und 2 dargestellten Seitenfläche 37 der Messerplatte 9 anliegt.

Die unten links in Figur 3 wiedergegebene Unteransicht des als Ring 27 ausgebildeten Justierelements 25 der Justiereinrichtung 23 zeigt, dass die zentrale Öffnung 65 des Rings 27 von einem konischen Bereich 67 umgeben ist, der von der Oberseite 63 ausgehend zur Öffnung 65 abfällt.

In der Mitte in Figur 3 ist das als Ring 27 ausgebildete Justierelement 25 der Justiereinrichtung 23 im Schnitt dargestellt, wobei die Schnittlinie entlang einer Durchmesserlinie geführt ist, die durch den Stift 57 der Positioniereinrichtung 61 läuft. Deutlich erkennbar ist, dass der Stift 57 in eine Ausnehmung 53 im Justierelement 25 eingesetzt ist und über die Unterseite 51 des Rings 27 hinaus ragt, um in den Grundkörper 11 des Werkzeugs 1 einzugreifen.

Die zentrale Durchgangsöffnung 65 ist, wie anhand von der Draufsicht erläutert, mit einem gewölbten oder konischen Bereich 67 versehen. An diesem Innenkonus kann ein Außenkonus einer hier nicht dargestellten Justierschraube 29 angreifen, um das Justierelement 25 aufzuweiten. Da dieser hier als geschlitzter Ring 27 ausgebildet ist, ist eine Aufweitung des Rings 27 ohne besonders hohe Kräfte möglich, sodass die Justiereinrichtung 23 sehr feinfühlig eingestellt werden kann.

In Figur 3 ist rechts schließlich noch das Justierelement 25 der Justiereinrichtung 23 in perspektivischer Darstellung wiedergegeben. Es wird hier die Oberseite 63 gezeigt. Deutlich erkennbar sind die zentrale Öffnung 25 mit dem den Innenkonus bildenden konischen Bereich 37 und der Schlitz 39. Gleiche Teile sind mit gleichen Bezugsziffern versehen, sodass insofern auf die vorangegangene Beschreibung verwiesen wird.

Bei der perspektivischen Darstellung ist der Stift 57 der Positioniereinrichtung 61 verdeckt und damit unsichtbar.

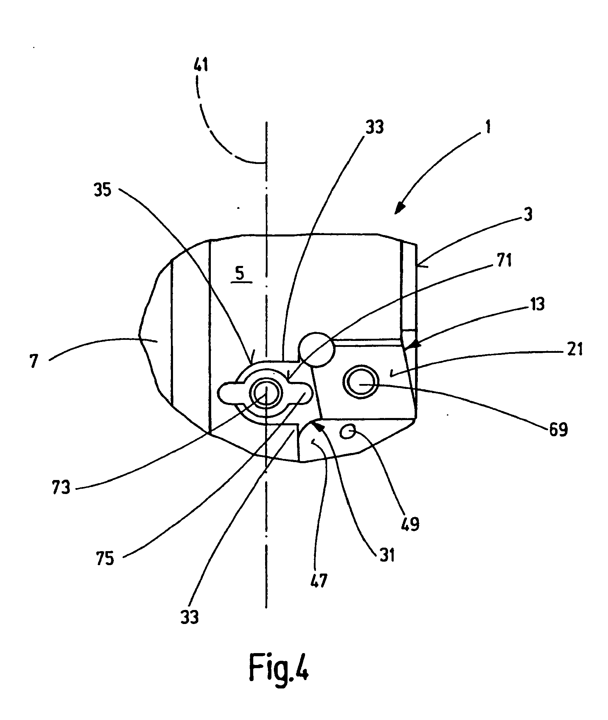

Figur 4 zeigt schließlich eine Teilansicht des Werkzeugs 1 in Seitenansicht. Es könnte sich hier um den Bereich nahe der Mittellinie 19 in Figur 2 handeln. Allerdings sind hier die Messerplatte 9, die Spannschraube 15, die Justiereinrichtung 23 mit dem Justierelement 25, das als Ring 27 ausgebildet ist, und die Justierschraube 29 nicht wiedergegeben. Deutlich erkennbar ist hier die Grundfläche 21 der die Messerplatte 9 aufnehmenden Ausnehmung 13, auf der die der Vorderseite 17 gegenüberliegende Unterseite der Messerplatte 9 aufliegt. Die Grundfläche 21 wird von einer Ausnehmung 69 durchbrochen, die mit einem Innengewinde versehen ist, in das die Spannschraube 15 eingreift, die hier nicht wiedergegeben ist.

Entsprechend ist die Tasche 31 zu erkennen, welche die Justiereinrichtung 23 aufnimmt. Deren Justierelement liegt auf einer Unterseite 71 der Tasche 31 auf, die eine mit einem Innengewinde versehene Ausnehmung 73 aufweist, in welche die Justierschraube 29 der Justiereinrichtung 23 eingreift.

In die Unterseite 71 ist ein hier horizontal verlaufender Schlitz 75 eingebracht. Er verläuft in der Richtung, in der die Justiereinrichtung 23 in die Tasche 31 eingeschoben wird. Der Schlitz 75 erstreckt sich bis an die Grundfläche 21. Es ist also möglich, bei ausgebauter Messerplatte 9 das als Ring 27 ausgebildete Justierelement 25 der Justiereinrichtung 23 so auf die Unterseite 71 zu legen, dass der Stift 57 in den Schlitz 75 eingreift. Dann kann die Justiereinrichtung 23 entlang einer gedachten geraden Linie, auf der der Schlitz 75 liegt, in die Tasche 31 eingeschoben werden. Durch den Schlitz 75 wird nach dem Einbringen der Justierschraube 29 eine Drehung des als Ring 27 ausgebildeten Justierelements 25 um die Justierschraube 29 verhindert, sodass der Schlitz 39 im Ring 27 an einer vorbestimmten Position angeordnet und gehalten werden kann.

Bei dem hier beschriebenen Werkzeug 1 ist vorgesehen, dass der Schlitz 39 etwa auf einer Umfangslinie 41 angeordnet ist, sodass bei Betätigung der Justierschraube 29 eine erste Hälfte des als Ring 27 ausgebildeten Justierelements 25 in Richtung auf die Messerplatte 9 verschwenkt, während eine zweite Hälfte sich am Grund der Tasche 31 abstützt, sodass sichergestellt ist, dass die Justierschraube 29 nicht aus ihrer zentralen Ausrichtung gegenüber der Ausnehmung 73 verbogen wird.

Die Darstellung gemäß Figur 4 zeigt noch, dass die Unterseite 21 der Tasche 31 bereichsweise durch die Wand 33 überspannt wird, sodass die Justiereinrichtung 23 auch bei hohen Drehzahlen sicher in der Tasche 31 gehalten wird. Aufgrund der Durchbrechung 35 ist gewährleistet, dass die Justierschraube 29 der Justiereinrichtung 23 auch bei eingesetztem Justierelement 25 gut erreich- und betätigbar ist.

Überdies zeigt sich, dass das Justierelement 25 der Justiereinrichtung 23 sehr flach ausgebildet sein kann. Er kann auch dünner als die Messerplatte 9 ausgelegt werden, oder auch gleich dick, sodass praktisch über die ganze Höhe der Messerplatte 9 Justierkräfte in die Seitenfläche 27 der Messerplatte 9 eingeleitet werden.

Im Übrigen ist die Justiereinrichtung 23 sehr klein und leicht. Sie kann also in einer kleinen Tasche 31 untergebracht werden, sodass der Grundkörper 11 des Werkzeugs 1 nicht unnötig geschwächt wird.

## Patentansprüche

1. Zerspanungswerkzeug mit
- einem Grundkörper (11),
- mindestens einem an dem Grundkörper (11) anbringbaren Schneidkörper, der wenigstens eine geometrisch definierte Schneide (43) aufweist, und mit
- einer ein mittels einer Justierschraube (29) aufspreizbares Jus-tierelement (25) aufweisenden Justiereinrichtung (23), wobei
- das Justierelement (25) als geschlitzter Ring (27) ausgebildet ist, der sich einerseits an dem Schneidkörper und andererseits an dem Grundkörper (11) des Zerspanungswerkzeugs (1) abstützt, und wobei
- die Justiereinrichtung (23) mit einer Positioniererinrichtung (61) zusammenwirkt,
**dadurch gekennzeichnet, dass**
- die Positioniereinrichtung (61) einen als Stift (57) ausgebildeten Vorsprung aufweist,
- der in den Grundkörper (11) des Zerspanungswerkzeugs (1) eingreift,
- der eine ungewollte Relativdrehbewegung der Justiereinrichtung (23) gegenüber dem Grundkörper (11) des Zerspanungswerkzeugs (1) verhindert, und dass
- der Stift (57) in einen Schlitz (75) im Grundkörper (11) des Zerspanungswerkzeug (1) eingreift.

2. Zerspanungswerkzeug nach Anspruch 1, **dadurch gekennzeichnet, dass** der Schneidkörper als Messerplatte (9) ausgebildet ist.

3. Zerspanungswerkzeug nach Anspruch 1 oder 2, **dadurch gekennzeichnet, dass** die in Richtung seiner Mittelachse gemessene Dicke des Justierelements (25) der Justiereinrichtung (23) kleiner oder gleich ist wie die Dicke des Schneidkörpers (9).

4. Zerspanungswerkzeug nach Anspruch 1, **dadurch gekennzeichnet, dass** der Stift (57) in das Justierelement (25) der Justiereinrichtung (23) einsetzbar ist.

5. Zerspanungswerkzeug nach einem der vorhergehenden Ansprüche, **dadurch gekennzeichnet, dass** der Stift (57) in einen Bereich des Justierelements (25) des Rings (27) einsetzbar ist, der gegenüber dem Schlitz (39) um circa 90° versetzt ist.

6. Zerspanungswerkzeug nach einem der vorhergehenden Ansprüche, **dadurch gekennzeichnet, dass** die Justiereinrichtung (23) in eine in den Grundkörper (11) des Zerspanungswerkzeugs (1) eingebrachte Tasche (32) einsetzbar ist, die sich in Richtung auf den Schneidkörper öffnet.

7. Zerspanungswerkzeug nach Anspruch 6, **dadurch gekennzeichnet, dass** die Tasche (31) von einer Wand (33) begrenzt wird, deren Außenseite mit der Umfangsfläche (5) des Zerspanungswerkzeugs (1) zusammenfällt.

8. Zerspanungswerkzeug nach Anspruch 7, **dadurch gekennzeichnet, dass** die Wand (33) eine Durchbrechung (35) aufweist, über die eine Justierschraube (29) in den Grundkörper (11) des Zerspanungswerkzeugs einsetzbar und betätigbar ist.

9. Zerspanungswerkzeug nach einem der vorhergehenden Ansprüche, **dadurch gekennzeichnet, dass** die Justierschraube (29) den Ring (27) der Justiereinrichtung (23) durchgreift.

10. Zerspanungswerkzeug nach Anspruch 9, **dadurch gekennzeichnet, dass** die Drehachse der Justierschraube (29) konzentrisch zur Mittelachse des Rings (27) verläuft.

11. Zerspanungswerkzeug nach einem der vorhergehenden Ansprüche, **dadurch gekennzeichnet, dass** die Justierschraube (29) und das Justierelement (25) der Justiereinrichtung (23) ein Keilgetriebe bilden.

12. Zerspanungswerkzeug nach Anspruch 11, **dadurch gekennzeichnet, dass** Justierschraube (23) und/oder der Ring (27) eine Keilfläche aufweisen, wobei einerseits ein Innenkonus und andererseits ein in den Innenkonus eingreifender Außenkonus vorgesehen sind.

## Claims

1. Chip-removing tool with
- a basic body (11),
- at least one cutting body which is attachable to the basic body (11), which cutting body has at least one geometrically defined cutting edge (43), and with
- an adjusting device (23) having an adjusting element (25) which is expandable by means of an adjusting screw (29), wherein
- the adjusting element (25) is configured as a slotted ring (27) which is supported, on the one hand, on the cutting body and, on the other hand, on the basic body (11) of the chip-removing tool (1), and wherein
- the adjusting device (23) cooperates with a positioning device (61),
**characterized in that**
- the positioning device (61) has a projection which is configured as pin (57),
- which engages into the basic body (11) of the chip-removing tool (1),
- which prevents an undesired relative rotational movement of the adjusting device (23) with respect to the basic body (11) of the chip-removing tool (1), and that
- the pin (57) engages into a slot (75) within the basic body (11) of the chip removing tool (1).

2. Chip-removing tool according to claim 1, **characterized in that** the cutting body is configured as knife plate (9).

3. Chip-removing tool according to claim 1 or 2, **characterized in that** the thickness of the adjusting element (25) of the adjusting device (23), measured in the direction of its mid-axis, is smaller than or equal to the thickness of the cutting body (9).

4. Chip-removing tool according to claim 1, **characterized in that** the pin (57) can be inserted into the adjusting element (25) of the adjusting device (23).

5. Chip-removing tool according to one of the preceding claims, **characterized in that** the pin (57) can be inserted into a region of the adjusting element (25) of the ring (27) which is offset with respect to the slot (39) by approximately 90°.

6. Chip-removing tool according to one of the preceding claims, **characterized in that** the adjusting device (23) can be inserted into a pocket (32) which is introduced into the basic body (11) of the chip-removing tool (1) and which opens in the direction of the cutting body.

7. Chip-removing tool according to claim 6, **characterized in that** the pocket (31) is delimited by a wall (33), the outside of which coincides with the circumferential face (5) of the chip-removing tool (1).

8. Chip-removing tool according to claim 7, **characterized in that** the wall (33) has a perforation (35), via which an adjusting screw (29) can be inserted into the basic body (11) of the chip-removing tool and can be actuated.

9. Chip-removing tool according to one of the preceding claims, **characterized in that** the adjusting screw (29) passes through the ring (27) of the adjusting device (23).

10. Chip-removing tool according to claim 9, **characterized in that** the axis of rotation of the adjusting screw (29) runs concentrically with respect to the mid-axis of the ring (27).

11. Chip-removing tool according to one of the preceding claims, **characterized in that** the adjusting screw (29) and the adjusting element (25) of the adjusting device (23) form a wedge mechanism.

12. Chip-removing tool according to claim 11, **characterized in that** the adjusting screw (23) and/or the ring (27) have/has a wedge face, wherein, on the one hand, an inner cone and, on the other hand, an outer cone which engages into the inner cone are provided.

## Revendications

1. Outil d'enlèvement de copeaux avec
- un corps de base (11),
- au moins un corps de coupe pouvant s'attacher au corps de base (11), lequel présente au moins un tranchant géométriquement défini (43), et avec
- un dispositif de réglage (23) présentant un élément de réglage (25) pouvant s'étendre au moyen d'une vis de réglage (29), dans lequel
- l'élément de réglage (25) est conçu sous forme d'anneau fendu (27) qui s'appuie d'un côté sur le corps de coupe et, de l'autre, sur le corps de base (11) de l'outil d'enlèvement de copeaux (1), et dans lequel
- le dispositif de réglage (23) coopère avec un dispositif de positionnement (61),
**caractérisé en ce que**
- le dispositif de positionnement (61) présente une saillie, conçue sous forme de goupille (57),
- qui s'engage dans le corps de base (11) de l'outil d'enlèvement de copeaux (1),
- qui empêche un déplacement de rotation relatif du dispositif de réglage (23) par rapport au corps de base (11) de l'outil d'enlèvement de copeaux (1), et que
- la goupille (57) s'engage dans une fente (75) dans le corps de base (11) de l'outil d'enlèvement de copeaux (1).

2. Outil d'enlèvement de copeaux selon la revendication 1, **caractérisé en ce que** le corps de coupe est conçu sous forme de plaque de coupe (9).

3. Outil d'enlèvement de copeaux selon la revendication 1 ou 2, **caractérisé en ce que** l'épaisseur de l'élément de réglage (25) du dispositif de réglage (23), mesurée en direction de son axe central, est inférieure ou égale à l'épaisseur du corps de coupe (9).

4. Outil d'enlèvement de copeaux selon la revendication 1, **caractérisé en ce que** la goupille (57) peut être insérée dans l'élément de réglage (25) du dispositif de réglage (23).

5. Outil d'enlèvement de copeaux selon l'une des revendications précédentes, **caractérisé en ce que** la goupille (57) peut être insérée dans une zone de l'élément de réglage (25) de l'anneau (27) qui est décalée d'environ 90° par rapport à la fente (39).

6. Outil d'enlèvement de copeaux selon l'une des revendications précédentes, **caractérisé en ce que** le dispositif de réglage (23) peut être inséré dans une poche (32) rentrée dans le corps de base (11) de l'outil d'enlèvement de copeaux (1), laquelle s'ouvre en direction du corps de coupe.

7. Outil d'enlèvement de copeaux selon la revendication 6, **caractérisé en ce que** la poche (31) est délimitée par une paroi (33) dont le côté extérieur coïncide avec la surface périphérique (5) de l'outil d'enlèvement de copeaux (1).

8. Outil d'enlèvement de copeaux selon la revendication 7, **caractérisé en ce que** la paroi (33) présente un trou débouchant (35) au travers duquel une vis de réglage (29) peut être insérée et manoeuvrée dans le corps de base (11) de l'outil d'enlèvement de copeaux.

9. Outil d'enlèvement de copeaux selon l'une des revendications précédentes, **caractérisé en ce que** la vis de réglage (29) passe à travers l'anneau (27) du dispositif de réglage (23).

10. Outil d'enlèvement de copeaux selon la revendication 9, **caractérisé en ce que** l'axe de rotation de la vis de réglage (29) s'étend de manière concentrique vers l'axe central de l'anneau (27).

11. Outil d'enlèvement de copeaux selon l'une des revendications précédentes, **caractérisé en ce que** la vis de réglage (29) et l'élément de réglage (25) du dispositif de réglage (23) forment un mécanisme de cale.

12. Outil d'enlèvement de copeaux selon la revendication 11, **caractérisé en ce que** la vis de réglage (23) et/ou l'anneau (27) présentent une surface de cale, dans lequel sont prévus un cône intérieur, d'une part, et un cône extérieur engageant dans le cône intérieur, d'autre part.
